# EUROPEAN PATENT APPLICATION

(11) **EP 4 527 688 A1**
(43) Date of publication of application: **26.03.2025**
(21) Application number: 24202009.7
(22) Date of filing: 23.09.2024
(51) Int. Cl.: B60P 3/32, G06Q 10/00

(54) **ELECTRONIC TRAILER MONITORING AND CONTROL**

(30) Priority: 22.09.2023 US 202363584754 P; 21.09.2024 US 202418892354
(71) Applicant: Thor Tech, Inc., Elkhart, IN 46514 (US)
(72) Inventor: Cook, Chris, Elkhart, 46514 (US); Pendl, Chris, Elkhart, 46514 (US)
(74) Representative: Müller Schupfner & Partner Patent- und Rechtsanwaltspartnerschaft mbB (Muc)

(57) **Abstract**

Systems and methods for electronic trailed recreational vehicle monitoring and control are provided. Some embodiments comprise determining a state of a trailed recreational vehicle that is coupled to a towing vehicle, and in response to determining that the state of the trailed recreational vehicle is traveling, receiving, via a head unit in the towing vehicle, first user input to control a vehicle system, determine that the vehicle system is not available, access a first operational system that corresponds to the vehicle system, control the first operational system, and provide data related to the first operational system via the head unit. In some embodiments, in response to determining that the state of the trailed recreational vehicle is camping, the method receives second user input to control a second operational system of the trailed recreational vehicle, and controls the second operational system.

## Description

### CROSS REFERENCE

This application claims the benefit of U.S. Provisional Application Serial Number 63/584,754, filed September 22, 2024, and U.S. Application Serial No. 18/892,354 filed on September 21, 2024, which are hereby incorporated by reference in their entirety.

### BACKGROUND

Recreational vehicles (RVs) are becoming more popular with the general public and, as a consequence, are becoming more sophisticated. One of the more popular types of RVs are trailed recreational vehicle. A trailed recreational vehicle is an RV that does not travel on its own, but is pulled by another vehicle. While the trailed recreational vehicle may provide a full suite of amenities inside, the trailed recreational vehicle has the flexibility of being towed by any suitable vehicle.

Currently, an owner of a trailed recreational vehicle will have a first device in the vehicle for navigation; a second device for providing data about the trailed recreational vehicle (tire pressure, etc.), and a third that provides a backup camera. While such a configuration may be useful, it can be burdensome to attach three separate devices to a trailed recreational vehicle. It also does not provide integration of the various functions provided by each of the devices or allow for any feedback control. As such, a need exists in the industry for an electronic trailed recreational vehicle monitoring and control.

### SUMMARY

Systems and methods for electronic trailed recreational vehicle monitoring and control are provided. Some embodiments comprise determining a state of a trailed recreational vehicle that is coupled to a towing vehicle, and in response to determining that the state of the trailed recreational vehicle is traveling, receiving, via a head unit in the towing vehicle, first user input to control a vehicle system, determine that the vehicle system is not available, access a first operational system that corresponds to the vehicle system, control the operational system, and provide data related to the first operational system via the head unit. In some embodiments, in response to determining that the state of the trailed recreational vehicle is camping, the method receives second user input to control a second operational system of the trailed recreational vehicle, and controls the second operational system.

Embodiments of a system comprise a trailed recreational vehicle that is coupled with a towing vehicle, where the trailed recreational vehicle comprises a first operational system of a plurality of operational systems, and where the towing vehicle comprises at least one vehicle system. The system may also comprise a head unit that is coupled with the towing vehicle and a local computing device that is coupled with the trailed recreational vehicle that comprises a processor and a memory component for storing logic. When the logic is executed by the processor, the logic causes the system to determine a state of the trailed recreational vehicle and, in response to determining that the state of the trailed recreational vehicle is traveling, receive via the head unit, first user input to control the at least one vehicle system, determine that the at least one vehicle system is not available, access the first operational system that corresponds to the at least one vehicle system, control the first operational system, and provide data related to the first operational system via the head unit. In some embodiments, the logic causes the system, in response to determining that the state of the trailed recreational vehicle is camping, to receive second user input to control a second operational system, and control the second operational system.

Embodiments of a non-transitory computer-readable medium comprise logic that, when executed by a computing device, causes the computing device to determine a state of a trailed recreational vehicle that is coupled to a towing vehicle and, in response to determining that the state of the trailed recreational vehicle is traveling, receive via a head unit in the towing vehicle, first user input to control a vehicle system, determine that the vehicle system is not available, access a first operational system that corresponds to the vehicle system, control the first operational system, and provide data related to the first operational system via the head unit. In some embodiments, the logic causes the computing device, in response to determining that the state of the trailed recreational vehicle is camping, to receive second user input to control the second operational system of the trailed recreational vehicle, and control the second operational system.

Embodiments of a system comprise a trailer that is coupled with a towing vehicle, where the trailer comprises a first operational system of a plurality of operational systems, and where the towing vehicle comprises at least one vehicle system. The system may also comprise a head unit that is coupled with the towing vehicle and a local computing device that is coupled with the trailer that comprises a processor and a memory component for storing logic. When the logic is executed by the processor, the logic causes the system to determine a state of the trailer and, in response to determining that the state of the trailer is traveling, receive via the head unit, first user input to control the at least one vehicle system, determine that the at least one vehicle system is not available, access a first operational system of the plurality of operational systems that corresponds to the at least one vehicle system, control the first operational system, and provide data related to the first operational system via the head unit. In some embodiments, the logic causes the system, in response to determining that the state of the trailer is camping, to receive second user input to control a second operational system, and control the second operational system.

### BRIEF DESCRIPTION

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, there is no intent to limit the disclosure to the embodiment or embodiments disclosed herein. On the contrary, the intent is to cover all alternatives, modifications, and equivalents.
FIG. 1 depicts a computing environment for electronic trailer management and control, according to embodiments provided herein;
FIG. 2 depicts a user interface for determining whether a trailer is traveling or camping, according to embodiments provided herein;
FIG. 3 depicts a user interface for providing options related to a trailer that is traveling, according to embodiments provided herein;
FIG. 4 depicts a user interface for providing options related to a trailer that is camping, according to embodiments provided herein;
FIG. 5 depicts a flowchart for electronic trailer management and control, according to embodiments provided herein;
FIG. 6 depicts a flowchart for trailer management among a plurality of modes, according to embodiments provided herein; and
FIG. 7 depicts a remote computing device for electronic trailer management and control, according to embodiments provided herein.

### DETAILED DESCRIPTION

Embodiments disclosed herein include a system and/or method for electronic trailer management and control. Specifically, embodiments provided herein are configured to provide a single user device that provides data regarding a trailed recreational vehicle and integrates various streams of data to provide options and control of the towing vehicle and trailed recreational vehicle. Embodiments may also be configured to determine whether the trailed recreational vehicle is traveling or camping, may alter operation of the towing vehicle and/or trailed recreational vehicle, and may provide user options and/or output, based on that determination. The determination may be made from a user selection of a provided option and/or automatically determined based on location or motion of the trailed recreational vehicle. When the trailed recreational vehicle is determined to be traveling, tire pressure information, as well as a backup camera display, options for power save, etc. and related options may be provided. When the trailed recreational vehicle is determined to be camping, options may be provided related to illuminating outdoor lighting and/or other camping systems may be provided, as well as trailed recreational vehicle information related to camping.

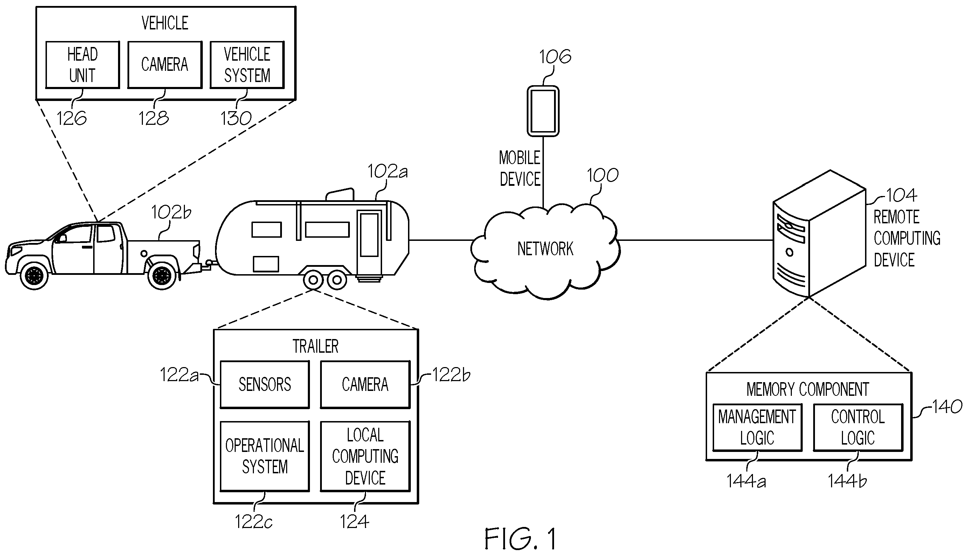

Referring now to the drawings, FIG. 1 depicts a computing environment for electronic trailer management and control, according to embodiments provided herein. As illustrated, the computing environment includes a network 100 that couples a trailed recreational vehicle 102a with a towing vehicle 102b, a remote computing device 104, and a mobile device 106. The network 100 may be configured as any wide area network (WAN), such as the internet, cellular network, public switch telephone network (PSTN), satellite network, etc.; local area network (LAN), such as Ethernet, wireless-fidelity (Wi-Fi), etc.; and/or any personal area network (PAN), such as Zigbee^{™}, Bluetooth^{™}, etc.

It should be noted that the term "coupled to" as referred to herein may include being physically coupled, electrically coupled, and/or communicatively coupled. As an example, a head unit 126 may be physically coupled to a towing vehicle 102a, such that the head unit 126 is integral to the towing vehicle 102 or may be removably attached to the towing vehicle 102a. In such an embodiment, the head unit 126 may also be electrically coupled to the towing vehicle 102a such that power is provided from the towing vehicle 102a to the head unit 126. Similarly, the head unit 126 may be communicatively coupled to the towing vehicle 102a in that the towing vehicle 102a may communicate with the head unit 126 to receive and/or provide data.

The trailed recreational vehicle 102a may be configured as any trailed recreational vehicle, such as personal travel trailers, fifth wheels, lightweight RVs, toy haulers, etc. The trailed recreational vehicle 102a may be coupled to the towing vehicle 102b. As such, the trailed recreational vehicle 102a may be configured with a sensor 122a, a trailed recreational vehicle camera 122b, an operational system 122c, and a local computing device 124. It will be understood that the sensor 122a represents one or more sensors, such as a proximity sensor, a motion sensor, speed sensor, a connection sensor, a tire pressure sensor, hydraulic sensor, tail light sensor, temperature sensor, humidity sensor, and/or other sensor for providing information about the trailed recreational vehicle 102a. Similarly, the trailed recreational vehicle camera 122b may represent one or more video and/or still cameras that can capture imagery and/or audio related to an area around the trailed recreational vehicle 102a. Some embodiments may provide a backup camera, which is a trailed recreational vehicle camera 122b that is directed behind the trailed recreational vehicle 102a, such that the user can view an area behind the trailed recreational vehicle. Some embodiments may include cameras pointed in other directions. Operational system 122c may represent one or more operational systems of the 102a, such as computing infrastructure, a lighting system, a freshwater system, a graywater system, a black water system, a climate control system, a trailed recreational vehicle tire pressure sensor, an appliance (such as a refrigerator, a stove, a dishwasher, a microwave, etc.), a trailed recreational vehicle positioning system, a driver assistance system, a propulsion system, trailer camera 122b, a trailed recreational vehicle communication system for communicating with the towing vehicle 102b, etc. that may be controlled by the user.

As an example, some trailed recreational vehicles 102a may be self-propelling. As described in more detail below, the trailed recreational vehicle 102a may be configured to assist propelling the towing vehicle 102b while driving and/or may assist in reverse, such as for parking. Some embodiments may also include one or more batteries to fuel the propelling and/or for powering one or more of the operational systems. The local computing device 124 may represent any integrated and/or removable computing device for facilitating operation of the trailed recreational vehicle 102a and providing other functionality provided herein. As an example, the local computing device 124 may be part of the head unit 126 and thus integrated into the towing vehicle 102b. In some embodiments, the local computing device is a stand along component that may be removed from the towing vehicle 102b.

Regardless, the local computing device 124 may be located at a proximity of the trailed recreational vehicle 102a and/or the towing vehicle 102b to allow communication with the trailed recreational vehicle 102a and/or the towing vehicle 102b without utilizing a wide area network. Although a "recreational vehicle" may take a variety of forms, in its broadest sense, a "recreational" vehicle will comprise a vehicle body enclosing a living quarters equipped with, for example, a sleeping area, a dining area, a food storage area, a food preparation area, personal care areas, or combinations thereof.

The towing vehicle 102b may be any land-based vehicle that is configured for towing the trailed recreational vehicle 102a. As such, the towing vehicle 102b may include a head unit 126, a vehicle camera 128, and a vehicle system 130. The head unit 126 may be configured for providing the user interfaces provided herein. As such, some embodiments of the towing vehicle 102b may be configured with a vehicle camera 128 (one or more), such as a backup camera, side view camera, etc. Depending on the embodiment, the vehicle camera 128 may be part of at least one vehicle system 130. As described in more detail below, the vehicle camera 128 may be configured to provide imagery to a user via the head unit 126. In some embodiments, the vehicle camera 128 may be blocked by the trailed recreational vehicle 102a. Additionally, depending on the embodiment, the towing vehicle 102b may be configured with an internal combustion engine (ICE) and/or may be configured as an electric vehicle (EV) or hybrid. As such, some embodiments of the towing vehicle 102b may include a battery that stores energy for propelling the towing vehicle 102b. Other vehicle systems 130 may include a braking system, and acceleration system, a turn signal system, a battery system, a vehicle communication system, a vehicle positioning system, an infotainment system, a self-driving system, etc.

It should be understood that the example of FIG. 1 depicts the towing vehicle 102b coupled to the trailed recreational vehicle 102a and then to network 100. This is merely an example. Some embodiments may include an independent connection between the towing vehicle 102b and the network 100.

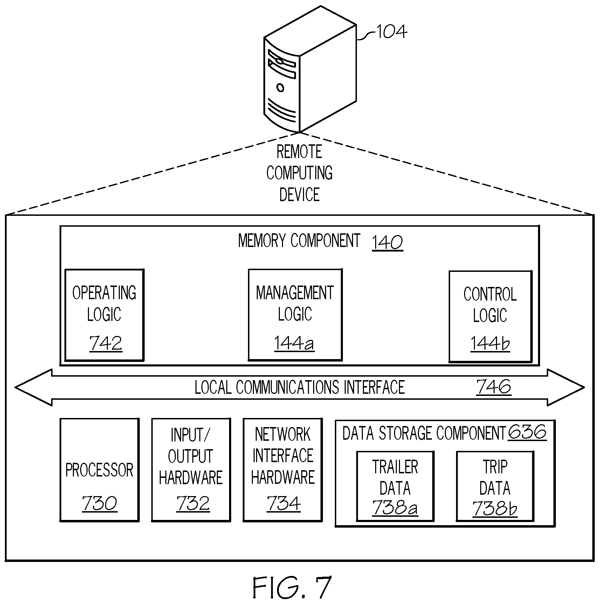

The remote computing device 104 may represent any general purpose or special purpose server, personal computer, laptop, tablet, and/or other computing device for providing the functionality provided herein. As such, the remote computing device 104 may include hardware and software as provided with reference to FIG. 7, such as a memory component 140, which stores management logic 144a and control logic 144b. The management logic 144a may cause the remote computing device 104 and/or local computing device 124 to receive sensor output and provide sensor data and other data to the user via a user interface, as described in more detail below. The control logic 144b may cause the remote computing device 104 and/or the local computing device 124 to control one or more assets of the trailed recreational vehicle 102a from the user interface, as also described in more detail below.

It will be understood that while FIG. 1 depicts the local computing device 124 as being provided in the trailed recreational vehicle 102a, some embodiments may include a computing device in addition to or in substitution for the local computing device 124. Specifically, some embodiments may include a head unit 126 in the towing vehicle 102b for providing user interfaces, which is not a computer itself, but communicates with the local computing device 124. Some embodiments may be configured such that the local computing device 124 is part of the head unit 126 and is disposed in the towing vehicle 102b. Some embodiments may be configured such that the head unit 126 is a separate computer as the local computing device 124. Similarly, in some embodiments, the logic described with the remote computing device 104 may be utilized by the local computing device 124.

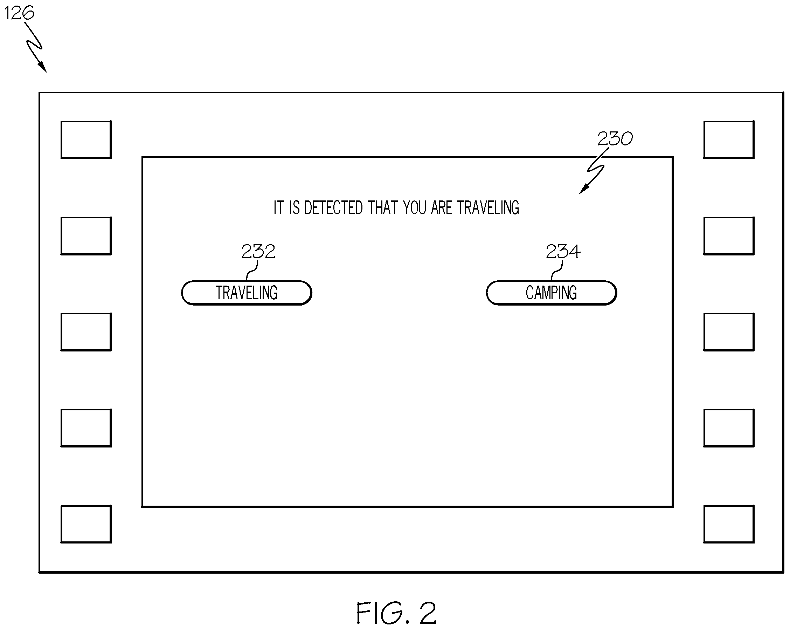

The mobile device 106 is also coupled to the network 100. The mobile device 106 may be configured as any general purpose or special purpose computing device that may be moved from a first location to a second location while maintaining functionality. It will be understood that some embodiments may be configured such that the user interfaces provided in FIGS. 2-4 may be provided by the mobile device 106 and/or the towing vehicle 102b. In some embodiments, the mobile device 106 may be configured to communicate with the local computing device 124 (and/or head unit 126) directly via a PAN network connection. The mobile device 106 may also be configured to communicate with the remote computing device 104 via a WAN connection.

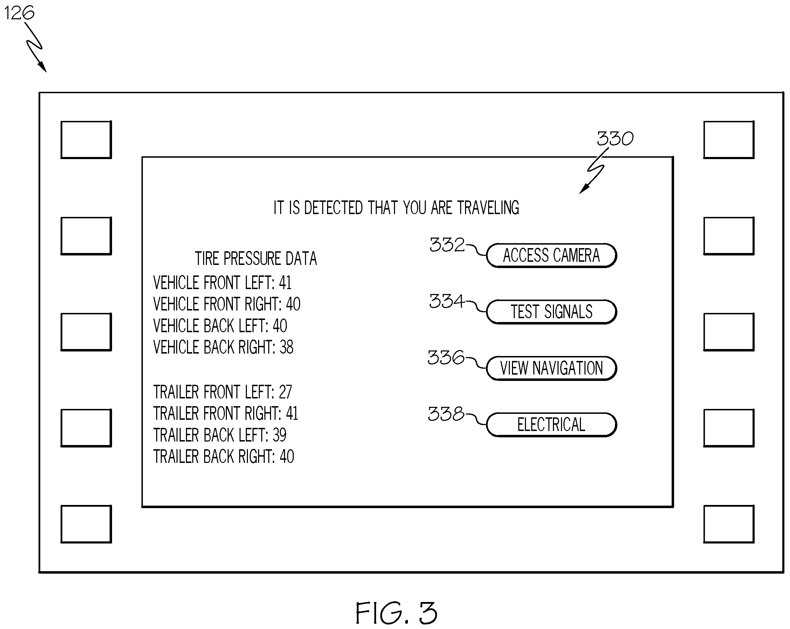

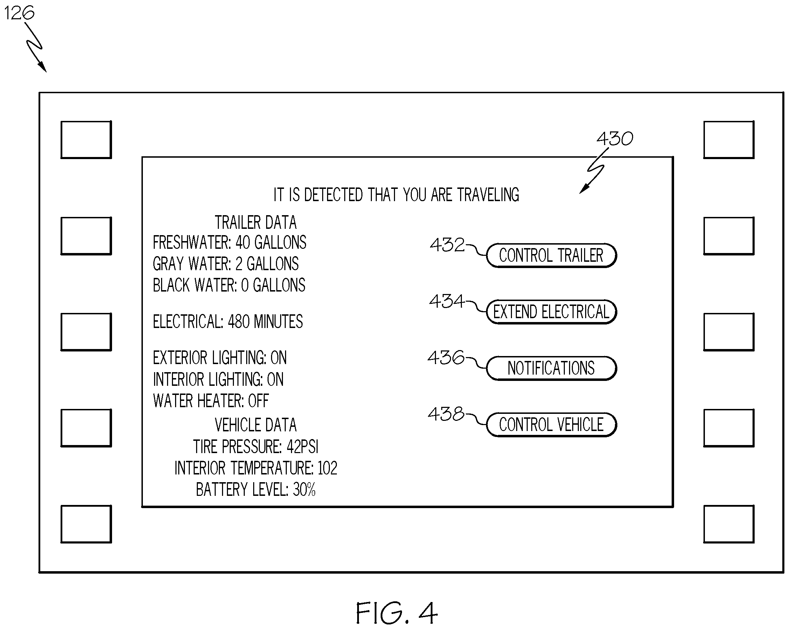

FIG. 2 depicts a head unit 126 that provides a user interface 230 for determining whether a trailed recreational vehicle 102a is traveling or camping, according to embodiments provided herein. As illustrated, the towing vehicle 102b may have an integrated head unit 126 that provides the user interface 230. As illustrated, the user interface 230 may include a traveling option 232 and a camping option 234. Some embodiments of the local computing device 124 may be configured to determine whether the trailed recreational vehicle 102a is traveling or camping from speed data collected from speed sensors on the trailed recreational vehicle 102a and/or towing vehicle 102b; from a schedule input by a user, from location data provided by a positioning system on the towing vehicle 102b, trailed recreational vehicle 102a, and/or mobile device 106; and/or from other information. In some embodiments, the local computing device 124 may not know whether the trailed recreational vehicle 102a is traveling or camping and may provide the options of FIG. 2. Regardless, in response to the user selecting the traveling option 232 and/or the local computing device 124 determining that the trailed recreational vehicle 102a is traveling or camping, the user interface 330 (FIG. 3) may be provided. In response to the user selecting the camping option 234, the user interface 430 (FIG. 4) may be provided.

FIG. 3 depicts a user interface 330 for providing options related to a trailed recreational vehicle 102a that is traveling, according to embodiments provided herein. In response to selection of the traveling option 232 from FIG. 2, the user interface 330 may be provided. As illustrated, the user interface 330 may include trailer travel data, including tire pressure data, brake light status data, speed data, direction data, etc. Also provided are an access camera option 332, a test signals option 334, and a view navigation option 336. In response to a user selecting the access camera option 332, an interface with the trailed recreational vehicle camera 122b imagery may be provided. In response to a user selecting the test signals option 334, the user may implement a test of turn signal mating between the towing vehicle 102b and the trailed recreational vehicle 102a, as well as brake lights and other signals. In response to a user selecting the view navigation option 336, a navigation interface may be provided.

It should be understood that depending on the particular embodiment, in response to selection of the access camera option (and/or putting the towing vehicle 102b in reverse, using a turn signal, etc.), embodiments provided herein may be configured to determine whether the vehicle camera 128 is obstructed due to the trailed recreational vehicle 102a. In response to determination that the vehicle camera 128 is obstructed, embodiments may be configured to automatically display images from the respective trailed recreational vehicle camera 122b. As an example, some embodiments may pair a vehicle camera 128 with a respective trailed recreational vehicle camera 122b, such that when the vehicle camera 128 is a rear view camera is obstructed, the local computing device 124 knows to automatically switch views to the trailed recreational vehicle camera 122b that is a rear view camera. The images from the trailed recreational vehicle camera 122b may then be provided by the head unit 126.

Also provided in the user interface 330 is an electrical option 338. Specifically, some embodiments may be configured to determine whether the towing vehicle 102b can reach a destination with the amount of energy currently being stored. If there is not enough energy stored by the towing vehicle 102b to reach the destination, these embodiments may transfer energy (such as via selection of the electrical option 338) from the battery of the trailed recreational vehicle 102a to the battery of the towing vehicle 102b (and/or the trailed recreational vehicle may invoke propulsion on the trailed recreational vehicle 102a to improve the travel efficiency of the towing vehicle 102b). It should be understood that some embodiments may be configured to determine likely electrical draw of the entire trip and develop a plan for the towing vehicle 102b and the trailed recreational vehicle 102a. As an example, if the user requests an energy transfer such as via the electrical option 338, some embodiments may determine an amount of energy to transfer to not only reach the destination, but also endure the rest of the trip (or until reaching the next charging station).

It should also be understood that some embodiments may be configured to determine where the towing vehicle 102b and trailed recreational vehicle 102a are currently located and in response to determining that the towing vehicle 102b and trailed recreational vehicle 102a are a predetermined distance or time from a desired destination (e.g., camp site), such as via a positioning system of the towing vehicle 102b, the trailed recreational vehicle 102a may automatically begin preparing for camping. Preparing for camping may include adjusting the internal temperature of the trailed recreational vehicle 102a, starting the water heater, preparing the lights, preparing the water system, etc. Other preparations may be made such as checking that there is enough energy stored by the trailed recreational vehicle 102a to complete the camping. If there is not enough energy stored, the local computing device 124 may determine an energy usage schedule to ensure there is enough energy and/or begin transferring energy from the towing vehicle 102b to the trailed recreational vehicle 102a.

FIG. 4 depicts a user interface 430 for providing options related to a trailed recreational vehicle 102a that is camping, according to embodiments provided herein. In response to a user selecting the camping option 234 from FIG. 2 (or otherwise determining that the trailed recreational vehicle 102a is camping), the user interface 430 may be provided. As illustrated, the user interface 430 may provide trailed recreational vehicle data associated with one or more operational systems 122c of the trailed recreational vehicle 102a, which may be utilized during camping. As an example, freshwater system data, gray water system data, black water system data, electrical capacity, lighting system data, water heater data, and/or other trailed recreational vehicle data may be provided. Also provided is vehicle data. Specifically, embodiments may be configured to access data from the towing vehicle 102b, such as tire pressure data, interior temperature data, engine temperature data, battery level data, etc.

Also included in the user interface 430 are a control trailed recreational vehicle option 432, an extend electrical option 434, a notifications option 436, and a control vehicle option 438. In response to a user selecting the control trailed recreational vehicle option 432, additional options may be provided for controlling one or more of the operational systems 122c of the trailed recreational vehicle 102a and/or one or more vehicle systems 130. As an example, a user may be provided with an option to turn off interior lighting, adjust a thermostat, and/or provide other similar functionality.

It will be understood that some embodiments may be configured for the local computing device 124 to determine which features of the trailed recreational vehicle 102a are associated with travel and which are associated with camping. As an example, some embodiments may determine that the turn signals are only used during travel, so the user interface 330 (FIG. 3) should include data about turn signals. Similarly, some embodiments may determine that interior lights are only used during camping and may thus provide data and/or options related to interior lights in the user interface 430 (FIG. 4) associated with camping. If a feature is used in both camping and traveling, that feature may be provided on both the user interface 330 (FIG. 3) and the user interface 430 (FIG. 4). Some embodiments may allow a user to select features to include on which user interface.

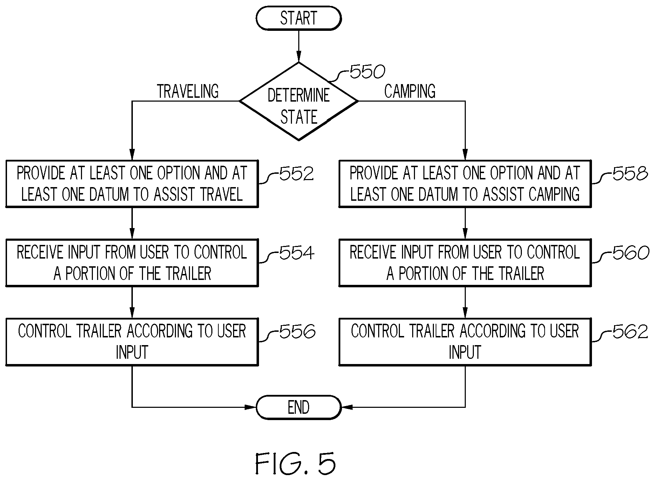

FIG. 5 depicts a flowchart for electronic trailed recreational vehicle management and control, according to embodiments provided herein. As illustrated in block 550, a determination may be made regarding the state of the trailed recreational vehicle 102a. In response to a determination that the trailed recreational vehicle 102a is traveling, in block 552, at least one option and at least one piece of data may be provided to the user to assist travel. This data may include tire pressure, battery level, etc. As discussed above, some embodiments may be configured to pull trailed recreational vehicle data and/or vehicle data. In block 554, input from the user may be received to control at least one operational system 122c of the trailed recreational vehicle 102a and/or at least one vehicle system 130. In some embodiments, the input may be on the user interface, while in some embodiments, the input may be to the towing vehicle 102b, which communicates to the head unit 126 (FIGS. 1, 2). As an example, if a user uses a turn signal on the towing vehicle 102b, the towing vehicle 102b may send data to the head unit 126, which determines whether a vehicle camera 128 is obstructed. In block 556, the trailed recreational vehicle 102a may be controlled according to user input. Referring to the turn signal example, if the head unit 126 determines that the vehicle camera 128 is obstructed, a feed from the trailed recreational vehicle camera 122b may be captured and sent for display to the user.

In response to determining that the trailed recreational vehicle 102a is camping, in block 558, at least one option and at least one piece of data may be provided to assist the user in camping. As described above, the option may be provided via a user interface in the head unit 126 (FIGS. 1, 2) and/or via the mobile device 106 (FIG. 1). The data may include sensor data from the towing vehicle 102b and/or trailed recreational vehicle 102a, such as trailed recreational vehicle tire pressure, vehicle tire pressure, vehicle battery state, water heater state, water tank capacity, etc. In block 560, input from the user may be received to control at least a portion of the trailed recreational vehicle 102a and/or vehicle associated with camping. In block 562, the trailed recreational vehicle 102a may be controlled according to the received user input (e.g., first user input, second user input, etc.). As an example, if the local computing device 124 determines that there is not enough energy to complete camping experience, embodiments may provide an option to pull energy from the towing vehicle 102b to charge the trailed recreational vehicle battery and/or power various systems of the trailed recreational vehicle 102a. As such, these embodiments may be configured such that the local computing device 124 includes an application program interface (API) to communicate with a vehicle computing device to determine this information. In some such embodiments, permission may be granted by a vehicle manufacturer to access the vehicle data and controls.

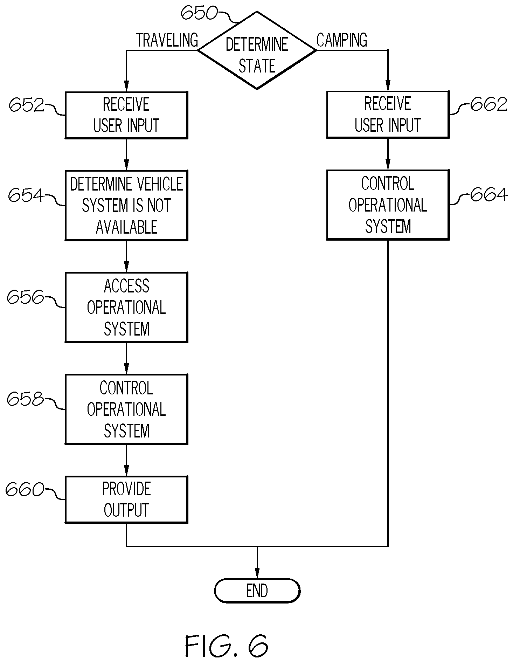

FIG. 6 depicts a flowchart for trailer management among a plurality of modes, according to embodiments provided herein. As illustrated in block 650, a determination is made regarding the state of the trailed recreational vehicle 102a is traveling or camping. This determination may be made based on a determination if the trailer is moving (e.g., at or above a threshold speed), if the trailed recreational vehicle 102a is located at a camping site, based on user input, based on the systems being used, etc. In response to determining that the trailed recreational vehicle 102a is traveling, at block 652, user input may be received via the head unit 126. The user input may be to control a vehicle system 130. In block 654, a determination may be made that the vehicle system 130 is not available. In block 656, an operational system that corresponds to the vehicle system, may be accessed. In block 658 the operational system 122c may be controlled. In block 660, data related to the operational system may be provided via the head unit. If at block 662, the determination is that the state of the trailed recreational vehicle 102a is camping, second user input to control the operational system of the trailed recreational vehicle 102a may be received. In block 664, the operational system may be controlled.

FIG. 7 depicts a remote computing device 104 for electronic trailer management and control, according to embodiments provided herein. As illustrated, the remote computing device 104 includes a processor 730, input/output hardware 732, network interface hardware 734, a data storage component 736 (which stores asset data 738a, trip data 738b, and/or other data), and the memory component 140. The memory component 140 may be configured as volatile and/or nonvolatile memory and as such, may include random access memory (including SRAM, DRAM, and/or other types of RAM), flash memory, secure digital (SD) memory, registers, compact discs (CD), digital versatile discs (DVD), and/or other types of non-transitory computer-readable mediums. Depending on the particular embodiment, these non-transitory computer-readable mediums may reside within the remote computing device 104 and/or external to the remote computing device 104.

The memory component 140 may store operating logic 742, the management logic 144a and the control logic 144b. The management logic 144a and the control logic 144b may each include a plurality of different pieces of logic, each of which may be embodied as a computer program, firmware, and/or hardware, as an example. A local interface 746 is also included in FIG. 7 and may be implemented as a bus or other communication interface to facilitate communication among the components of the remote computing device 104.

The processor 730 may include any processing component operable to receive and execute instructions (such as from a data storage component 736 and/or the memory component 140). The input/output hardware 732 may include and/or be configured to interface with microphones, speakers, a display, and/or other hardware.

The network interface hardware 734 may include and/or be configured for communicating with any wired or wireless networking hardware, including an antenna, a modem, LAN port, wireless fidelity (Wi-Fi) card, WiMax card, ZigBee card, Bluetooth chip, USB card, mobile communications hardware, and/or other hardware for communicating with other networks and/or devices. From this connection, communication may be facilitated between the remote computing device 104 and other computing devices, such as the mobile device 106 and/or the local computing device 124.

The operating logic 742 may include an operating system and/or other software for managing components of the remote computing device 104. As also discussed above, the management logic 144a and the control logic 144b may reside in the memory component 140 and may be configured to perform the functionality, as described herein.

It should be understood that while the components in FIG. 7 are illustrated as residing within the remote computing device 104, this is merely an example, as some embodiments may be configured with the local computing device 124 and/or the mobile device 106 with this hardware and/or software infrastructure to provide the described functionality. It should also be understood that, while the remote computing device 104 is illustrated as a single device, this is also merely an example. In some embodiments, the management logic 144a and the control logic 144b may reside on different computing devices. As an example, one or more of the functionalities and/or components described herein may be provided by the local computing device 124 and/or mobile device 106.

Additionally, while the remote computing device 104 is illustrated with the management logic 144a and the control logic 144b as separate logical components, this is also an example. In some embodiments, a single piece of logic (and/or or several linked modules) may cause the remote computing device 104 to provide the described functionality.

Embodiments provided herein include systems and methods for electronic trailer management and control. As such, these embodiments improve the technical field to RV electronic communications controlling various discrete vehicle systems via trailer hardware and software (and vice versa). As an example, predicting which trailer features are associated with camping and which are associated with traveling, the technical filed of RV communications is improved. Further, these systems and methods cannot be performed by a human with pen and paper for at least the reason that it is not detectible to the user which trailed recreational vehicle functions are used. As an example, if a user uses a vehicle turn signal, it may not be provided to the user whether the trailed recreational vehicle's turn signal is also activated.

Accordingly, embodiments provided herein include one or more of the following aspects:

A first aspect includes a system comprising: a trailed recreational vehicle that is coupled with a towing vehicle, wherein the trailed recreational vehicle comprises a plurality of operational systems, and wherein the towing vehicle comprises at least one vehicle system; a head unit that is coupled with the towing vehicle; a local computing device that is coupled with the trailed recreational vehicle that comprises a processor and a memory component for storing logic that when executed by the processor causes the system to perform at least the following: determine a state of the trailed recreational vehicle; in response to determining that the state of the trailed recreational vehicle is traveling, receive via the head unit, first user input to control the at least one vehicle system, determine that the at least one vehicle system is not available, access a first operational system of the plurality of operational systems that corresponds to the at least one vehicle system, control the first operational system, and provide data related to the first operational system via the head unit; and in response to determining that the state of the trailed recreational vehicle is camping, receive second user input to control a second operational system of the plurality of operational systems, and control the second operational system.

A second aspect includes the first aspect, wherein the plurality of operational systems comprises at least one of the following: computing infrastructure, a lighting system, a freshwater system, a graywater system, a black water system, a climate control system, a trailed recreational vehicle tire pressure sensor, an appliance, a positioning system, a driver assistance system, a propulsion system, a trailed recreational vehicle camera, or a trailed recreational vehicle communication system.

A third aspect includes the first aspect and/or the second aspect, wherein the at least one vehicle system comprises at least one of the following: a braking system, and acceleration system, a turn signal system, a battery system, a vehicle communication system, a positioning system, an infotainment system, or a self-driving system.

A fourth aspect includes any of the first aspect through the third aspect, wherein the head unit is communicatively coupled with the local computing device.

A fifth aspect includes any of the first aspect through the fourth aspect, wherein providing data related to the first operational system via the head unit comprises providing an output of the first operational system as a user interface on the head unit.

A sixth aspect includes any of the first aspect through the fifth aspect, wherein in response to determining that the state of the trailed recreational vehicle is camping, the logic further causes the system to receive, additional user input to control the at least one vehicle system, determine that the at least one vehicle system is not available, access the first operational system that corresponds to the at least one vehicle system, control the first operational system, and provide data related to the first operational system via the head unit.

A seventh aspect includes any of the first aspect through the sixth aspect, further comprising a mobile device that receives the second user input to control the second operational system, wherein the mobile device communicates at least a portion of the second user input to the head unit.

An eighth aspect includes any of the first aspect through the seventh aspect, wherein the head unit is onboard the towing vehicle and the local computing device is onboard the trailed recreational vehicle and wherein the at least one vehicle system is a vehicle camera and the first operational system is a trailed recreational vehicle camera.

A ninth aspect includes a method comprising: determining, by a computing device, a state of a trailed recreational vehicle that is coupled to a towing vehicle; in response to determining that the state of the trailed recreational vehicle is traveling, receiving, by the computing device, via a head unit in the towing vehicle, first user input to control a vehicle system, determine that the vehicle system is not available, access a first operational system that corresponds to the vehicle system, control the first operational system, and provide data related to the first operational system via the head unit; and in response to determining that the state of the trailed recreational vehicle is camping, receiving, by the computing device, second user input to control a second operational system of the trailed recreational vehicle, and control the second operational system.

A tenth aspect includes the ninth aspect, wherein the first operational system comprises at least one of the following: computing infrastructure, a lighting system, a freshwater system, a graywater system, a black water system, a climate control system, a trailed recreational vehicle tire pressure sensor, an appliance, a positioning system, a driver assistance system, a propulsion system, a trailed recreational vehicle camera, or a trailed recreational vehicle communication system.

An eleventh aspect includes the ninth aspect and/or tenth aspect, wherein the vehicle system comprises at least one of the following: a braking system, and acceleration system, a turn signal system, a battery system, a vehicle communication system, a positioning system, an infotainment system, or a self-driving system.

A twelfth aspect includes any of the ninth aspect through the eleventh aspect, further comprising, in response to determining that the state of the trailed recreational vehicle is camping, receiving additional user input to control the vehicle system, determine that the vehicle system is not available, access the first operational system that corresponds to the vehicle system, control the first operational system, and provide data related to the first operational system via the head unit.

A thirteenth aspect includes any of the ninth aspect through the twelfth aspect, wherein a mobile device receives the second user input to control the second operational system, wherein the mobile device communicates at least a portion of the second user input to the head unit.

A fourteenth aspect includes a non-transitory computer-readable storage medium that stores logic that, when executed by a computing device, causes the computing device to perform at least the following: determine a state of a trailed recreational vehicle that is coupled to a towing vehicle; in response to determining that the state of the trailed recreational vehicle is traveling, receive via a head unit in the towing vehicle, first user input to control a vehicle system, determine that the vehicle system is not available, access a first operational system that corresponds to the vehicle system, control the first operational system, and provide data related to the first operational system via the head unit; and in response to determining that the state of the trailed recreational vehicle is camping, receive second user input to control a second operational system of the trailed recreational vehicle, and control the second operational system.

A fifteenth aspect includes the fourteenth aspect, wherein the first operational system comprises at least one of the following: computing infrastructure, a lighting system, a freshwater system, a graywater system, a black water system, a climate control system, a trailed recreational vehicle tire pressure sensor, an appliance, a trailed recreational vehicle positioning system, a driver assistance system, a propulsion system, a trailed recreational vehicle camera, or a trailed recreational vehicle communication system.

A sixteenth aspect includes the fourteenth aspect and/or the fifteenth aspect, wherein the vehicle system comprises at least one of the following: a braking system, and acceleration system, a turn signal system, a battery system, a vehicle communication system, a vehicle positioning system, an infotainment system, or a self-driving system.

A seventeenth aspect includes any of the fourteenth aspect through the sixteenth aspect, wherein the head unit is communicatively coupled with a local computing device.

An eighteenth aspect includes any of the fourteenth aspect through the seventeenth aspect, wherein providing data related to the first operational system via the head unit comprises providing an output of the first operational system as a user interface on the head unit.

A nineteenth aspect includes any of the fourteenth aspect through the eighteenth aspect, wherein in response to determining that the state of the trailed recreational vehicle is camping, the logic further causes the computing device to receive, additional user input to control the vehicle system, determine that the vehicle system is not available, access the first operational system that corresponds to the vehicle system, control the first operational system, and provide data related to the first operational system via the head unit.

A twentieth aspect includes any of the fourteenth aspect through the nineteenth aspect, further comprising a mobile device that receives the second user input to control the second operational system, wherein the mobile device communicates at least a portion of the second user input to the head unit.

One should note that the flowcharts included herein show the architecture, functionality, and operation of a possible implementation of software. In this regard, each block can be interpreted to represent a module, segment, or portion of code, which comprises one or more executable instructions for implementing the specified logical function(s). It should also be noted that in some alternative implementations, the functions noted in the blocks may occur out of the order and/or not at all. For example, two blocks shown in succession may in fact be executed substantially concurrently or the blocks may sometimes be executed in the reverse order, depending upon the functionality involved.

It should be emphasized that the above-described embodiments are merely possible examples of implementations, merely set forth for a clear understanding of the principles of this disclosure. Many variations and modifications may be made to the above-described embodiment(s) without departing substantially from the spirit and principles of the disclosure. Further, the scope of the present disclosure is intended to cover all permutations and sub-permutations of all elements, features, and aspects discussed above. All such modifications and variations are intended to be included herein within the scope of this disclosure.

## Claims

1. A system comprising:
a trailed recreational vehicle that is coupled with a towing vehicle, wherein the trailed recreational vehicle comprises a plurality of operational systems, and wherein the towing vehicle comprises at least one vehicle system;
a head unit that is coupled with the towing vehicle;
a local computing device that is coupled with the trailed recreational vehicle that comprises a processor and a memory component for storing logic that when executed by the processor causes the system to perform at least the following:
determine a state of the trailed recreational vehicle;
in response to determining that the state of the trailed recreational vehicle is traveling, receive via the head unit, first user input to control the at least one vehicle system, determine that the at least one vehicle system is not available, access a first operational system of the plurality of operational systems that corresponds to the at least one vehicle system, control the first operational system, and provide data related to the first operational system via the head unit; and
in response to determining that the state of the trailed recreational vehicle is camping, receive second user input to control a second operational system of the plurality of operational systems, and control the second operational system.

2. The system of claim CLAIMS
Therefore, at least the following is claimed:
1 or 2, wherein the plurality of operational systems comprises at least one of the following: computing infrastructure, a lighting system, a freshwater system, a graywater system, a black water system, a climate control system, a trailed recreational vehicle tire pressure sensor, an appliance, a positioning system, a driver assistance system, a propulsion system, a trailed recreational vehicle camera, or a trailed recreational vehicle communication system.

3. The system of any one of the preceding claims, wherein the at least one vehicle system comprises at least one of the following: a braking system, and acceleration system, a turn signal system, a battery system, a vehicle communication system, a positioning system, an infotainment system, or a self-driving system.

4. The system any one of the preceding claims, wherein the head unit is communicatively coupled with the local computing device.

5. The system of any one of the preceding claims, wherein providing data related to the first operational system via the head unit comprises providing an output of the first operational system as a user interface on the head unit.

6. The system of any one of the preceding claims, wherein in response to determining that the state of the trailed recreational vehicle is camping, the logic further causes the system to receive, additional user input to control the at least one vehicle system, determine that the at least one vehicle system is not available, access the first operational system that corresponds to the at least one vehicle system, control the first operational system, and provide data related to the first operational system via the head unit.

7. The system of any one of the preceding claims, further comprising a mobile device that receives the second user input to control the second operational system, wherein the mobile device communicates at least a portion of the second user input to the head unit.

8. The system of any one of the preceding claims, wherein the head unit is onboard the towing vehicle and the local computing device is onboard the trailed recreational vehicle and wherein the at least one vehicle system is a vehicle camera and the first operational system is a trailed recreational vehicle camera.

9. A method comprising:
determining, by a computing device, a state of a trailed recreational vehicle that is coupled to a towing vehicle;
in response to determining that the state of the trailed recreational vehicle is traveling, receiving, by the computing device, via a head unit in the towing vehicle, first user input to control a vehicle system, determine that the vehicle system is not available, access a first operational system that corresponds to the vehicle system, control the first operational system, and provide data related to the first operational system via the head unit; and
in response to determining that the state of the trailed recreational vehicle is camping, receiving, by the computing device, second user input to control a second operational system of the trailed recreational vehicle, and control the second operational system.

10. The method of claim 9, wherein the first operational system comprises at least one of the following: computing infrastructure, a lighting system, a freshwater system, a graywater system, a black water system, a climate control system, a trailed recreational vehicle tire pressure sensor, an appliance, a positioning system, a driver assistance system, a propulsion system, a trailed recreational vehicle camera, or a trailed recreational vehicle communication system and/or wherein the vehicle system comprises at least one of the following: a braking system, and acceleration system, a turn signal system, a battery system, a vehicle communication system, a positioning system, an infotainment system, or a self-driving system.

11. The method of claim 9 or 10, further comprising, in response to determining that the state of the trailed recreational vehicle is camping, receiving additional user input to control the vehicle system, determine that the vehicle system is not available, access the first operational system that corresponds to the vehicle system, control the first operational system, and provide data related to the first operational system via the head unit.

12. The method of any one of claims 9 to 11, wherein a mobile device receives the second user input to control the second operational system, wherein the mobile device communicates at least a portion of the second user input to the head unit.

13. A non-transitory computer-readable storage medium that stores logic that, when executed by a computing device, causes the computing device to perform at least the following:
determine a state of a trailed recreational vehicle that is coupled to a towing vehicle;
in response to determining that the state of the trailed recreational vehicle is traveling, receive via a head unit in the towing vehicle, first user input to control a vehicle system, determine that the vehicle system is not available, access a first operational system that corresponds to the vehicle system, control the first operational system, and provide data related to the first operational system via the head unit; and
in response to determining that the state of the trailed recreational vehicle is camping, receive second user input to control a second operational system of the trailed recreational vehicle, and control the second operational system.

14. The non-transitory computer-readable storage medium of claim 13, wherein the logic, when executed by a computing device, causes the computing device to perform the method according to any one of claims 9 to 12.

15. The non-transitory computer-readable storage medium of claim 13 or 14, wherein the head unit is communicatively coupled with a local computing device and/or wherein providing data related to the first operational system via the head unit optionally comprises providing an output of the first operational system as a user interface on the head unit.
